# EUROPEAN PATENT APPLICATION

(11) **EP 4 512 235 A1**
(43) Date of publication of application: **26.02.2025**
(21) Application number: 23791387.6
(22) Date of filing: 14.03.2023
(51) Int. Cl.: A01G 29/00, A01G 13/02

(54) **PLANT FEEDING DEVICE**

(30) Priority: 22.04.2022 ES 202230366
(71) Applicant: Ferreiro Pazos, Alfonso Javier, 08700 Igualada, Barcelona (ES)
(72) Inventor: Ferreiro Pazos, Alfonso Javier, 08700 Igualada, Barcelona (ES)
(74) Representative: González López-Menchero, Álvaro Luis
(86) International application number: PCT/ES2023/070150
(87) International publication number: WO 2023/203266

(57) **Abstract**

The present invention relates to a plant feeding device made up of a bottomless chamber (3) in proximity to the tree well or planter. with an air-permeable lid (4), a series of conduits (7) at its base that are oriented towards the tree well or planter, and irrigation nozzles (9) at the top of the chamber (3), the chamber (3) being configured for compost or the introduction of fertilisers and plant protection products.

## Description

### TECHNICAL FIELD

The present application relates to a plant feeding device, especially designed for use in cities, urbanised areas and in areas with unstructured or impoverished soils or those requiring some minor soil correction, so that the soil is continuously enriched and the impoverishment of the tree well or planter where the plant is located is reduced.

### STATE OF THE ART

The use of planters and tree wells on sidewalks for growing plants, shrubs and especially trees is known in the state of the art. These trees generally do not develop as much as expected because the soils are not in natural conditions. They are continually becoming compacted and impoverished.

One solution, which is quite costly and problematic, is to supply nutrients by means of fertilisers and plant protection products, because pedestrians, their dogs and other animals use and step on the tree wells and planters, so not all the products that would be desirable can be used, nor can certain types of improvers and fertilisers be fertilised or supplied, in addition to frequently leading to undesirable side effects.

The applicant is not aware of any device similar to the invention.

### BRIEF EXPLANATION OF THE INVENTION

The invention consists of a plant feeding device according to claim 1 and the variants of which solve the problems of the state of the art.

This system provides a safe and protected space associated with the tree or plant in general, where improvers and organic matter can be supplied, and compost can be formed, promoting microbial, bacterial, and worm life, which enriches and naturalises the soil.

In addition, it facilitates access to root and soil treatments for the tree. It provides aeration and protection against both cold and hot adverse conditions for the roots, giving the plant a protected space against soil compaction caused by the trampling and continuous compaction of the ground. The device retains moisture, and if localised irrigation is added, composting is accelerated, the roots are guided to the protected space and the plant is irrigated.

The use of the device fosters root growth with the advantages that this entails in terms of plant stability, health and development.

A system that makes it easier to add organic matter to the tree without causing inconvenience to the public.

The device consists of a chamber in proximity to the tree well or planter where the target plant is located, with an air-permeable upper lid, a perforated wall, for example a mesh wall, in the buried area, and optionally a series of conduits at its base oriented towards the nearby tree well or planter, in the proximity preferably touching the apical portion of the plant's root system. It can also have drip and exudation irrigation nozzles..., if an irrigation system is to be added, at the top of the basket. The chamber is configured for composting organic waste such as leaves and can be used to contain any product or fertiliser desired, out of the reach of animals and people.

The lid has upper aeration holes, and can also be permeable on the sides facing the planter or tree well. Aeration or ventilation allows compost, in addition to allowing the passage of moisture such as rainwater. Preferably, it has a metal mesh or a small hole size to prevent small animals (rodents, cockroaches, etc.) from entering or leaving the sidewalk or planter. The perforated wall forming the chamber can be crossed by animals and other organisms, but as it is buried, the organisms that pass through are limited: earthworms, bacteria, etc. The perforated wall starts at a certain depth so that it is not enough to dig a little in order to access the interior, such that the access of rodents is prevented.

The device may also include, to promote the distribution of the materials supplied by the conduits and direct the roots to the enriched area, a drip irrigation system that introduces water in the proximity of the conduits or other localised irrigation systems.

The area below the chamber is preferably excavated and filled with the original soil mixed with new soil, selected according to the type of tree and soil. This soil will remain in contact with the material of the chamber through the perforated wall, allowing the passage of bacteria and other microorganisms, as well as worms and small organisms that help composting.

In one embodiment, the chamber is occupied by a removable basket, so that it can be emptied quickly and easily to replenish the material to be composted. Replacement can take place inside or outside the chamber. For example, the bottom of the basket may have irregularities, such as spikes driven into the ground to increase the contact surface and the mixing of material inside and outside the basket.

It is possible to connect chambers consecutively, among other reasons when the tree extends into the area improved by the device.

Other variants are shown in the rest of the specification.

### DESCRIPTION OF THE FIGURES

For a better understanding of the invention, the following figures are included.

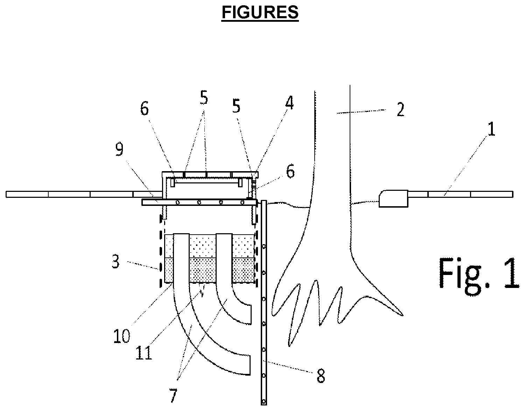

Figure 1 is a schematic lateral cross section of an exemplary embodiment with the lid raised.

### EMBODIMENTS OF THE INVENTION

An embodiment of the invention is briefly described below, as an illustrative and nonlimiting example thereof.

Figure 1 shows an exemplary embodiment applied on a sidewalk (1), in a place in proximity to a tree (2). The device can be around the tree itself, concentric thereto or on one side. It will generally be arranged on a side or a secluded spot, so that it is easy to open the device without affecting the passage of pedestrians.

The device comprises a bottomless chamber (3) with a ventilated lid (4) that can be placed flush with the sidewalk (1) so that it does not affect pedestrians, but in cases where it is on unpaved ground it may be raised so that the chamber (3) is not completely buried. The chamber (3) can be cylindrical, prismatic, inverted frustoconical or other shapes and dimensions.

The lid (4) has a series of ventilation holes (5), the cross section of which will be reduced to prevent objects from falling therein. The holes (5) can be circular, elongated, straight, curved... Inside the chamber (3) a mesh (6) or mosquito net or similar will be arranged to thus prevent unwanted insects or animals from entering or exiting through the holes or slots but allowing air access to the chamber (3). The mesh (6) also retains any objects that might pass through. The mesh (6) can be solidly attached to the lid (4) so that it can be removed when same is opened or have a frame that makes it self-supporting.

The lid (4) usually has a lock so that it cannot be opened without authorisation. For decoration and to reduce use by pedestrians, it can be covered with a layer of artificial grass that respects the holes or slots that allow proper aeration. Other decorative or technical layers are possible.

As can be seen in figure 1, the chamber (3) comprises perforated conduits (7) that lead to the tree area (2). Where appropriate, it could be a tree well, a planter... The conduits (7) are distributed spatially, so that they do not all reach the same height and are distributed along the roots of the tree (2). For example, they can be arranged at 50 and 70 cm depth when the device is used with a tree. If it is some type of shrub, they are placed higher. The conduits (7) have a grid or filter at the top, above the composting area, and at the bottom to limit the passage of material both at the entrance and exit of the pipe, and can be replaced or supplemented with a gravel filling at the bottom. The conduits (7) provide aeration and facilitate the entry of liquids for plant protection purposes or to improve the soil and root system. Since they are perforated, aeration and treatment are distributed throughout the lower area.

The chamber (3) is filled with compost material, such as dry leaves collected from the tree, straw, etc. (2), The manner of filling varies, an example being a mixture of crushed dry leaves at the bottom and whole dry leaves at the top. A space, for example 10 cm, is left for aeration between the lid (4) and the contents to be composted.

The device can be accompanied by a drip irrigation system (8) that introduces water in the proximity of the conduits (7), thus helping to guide the roots thereto. Water is also supplied to the top of the chamber (3) when it is considered necessary for composting. For this purpose, irrigation nozzles (9) are arranged at the top of the chamber (3).

The chamber (3) may have a removable basket (10) occupying its volume, so that it is easy to remove the composted material when it is to be renewed. The basket (10) may have a reinforcement structure and a series of grips or handles. If drip irrigation is installed at the top of the basket (10), it cannot be removed unless the tube is cut or dismantled to remove the basket. For example, the bottom of the basket (10) may have irregularities, such as spikes (11) driven into the ground to increase the contact surface and the mixing of material inside and outside the chamber.

It is possible to place, on the edge of the chamber (3), in proximity to the tree well, a sampling pole, with a series of watertight cavities arranged along the pole. This type of sampling pole is known in the art, the space provided being the improvement of the invention. This makes it possible to easily take samples of the soil from the tree well and from inside the chamber (3) to detect the presence of problems, such as fungi and the depth at which they are located, and to see the quality of the soil (texture, organic matter, microorganisms, etc.).

## Claims

1. A plant feeding device, **characterised in that** it is formed by a bottomless chamber (3) in proximity to the tree well or planter, with an air-permeable lid (4), and with a perforated wall in the portion configured to be buried, the chamber (3) being configured for compost.

2. The plant feeding device, according to claim 1, **characterised in that** it has in the lower portion of the chamber (3), and from the top thereof, a series of perforated conduits (7) oriented towards the tree well or planter filled with gravel in its lower portion.

3. The plant feeding device, according to claim 1, **characterised in that** it comprises irrigation nozzles (9) at the top of the chamber (3).

4. The plant feeding device according to claim 1, **characterised in that** the lid (4) comprises a series of holes (5).

5. The plant feeding device, according to claim 4, **characterised in that** it comprises a mesh (6) under the holes (5).

6. The plant feeding device, according to claim 1, **characterised in that** the lid (4) may contain artificial grass.

7. The plant feeding device, according to claim 1, **characterised in that** it comprises a drip irrigation system (8) that introduces water near the conduits (7).

8. The plant feeding device, according to claim 1, **characterised in that** it comprises a removable basket (10) occupying the chamber (3).
